# EUROPÄISCHE PATENTSCHRIFT

(11) **EP 1 855 443 B1**
(45) Veröffentlichungstag und Bekanntmachung des Hinweises auf die Patenterteilung: **16.12.2009**
(21) Anmeldenummer: 06009772.2
(22) Anmeldetag: 11.05.2006
(51) Int. Cl.: H04L 29/08

(54) **Verfahren zur Aktivation einer Loggings von Daten in einem Mobilgerät nach seiner Lokalisierung**
Method for activation of logging of data in mobile node according to location
Méthode d'activation du logging de données dans un terminal mobile selon la localisation du mobile

(43) Veröffentlichungstag der Anmeldung: 14.11.2007
(73) Patentinhaber: AGES International GmbH & Co. KG, 81549 München (DE)
(72) Erfinder: Selmayr, Peter, 83101 Rohrdorf (DE)
(74) Vertreter: Scheele, Friedrich

(56) Entgegenhaltungen:
- WO-A-2004/092876
- FR-A- 2 853 179
- US-A1- 2004 081 120
- US-B1- 6 336 073

## Beschreibung

Die Erfindung betrifft ein OnBoard-Unit - Backoffice-System für Fahrzeuge, ein Verfahren zum Betreiben eines OnBoard-Unit-Backoffice-Systems und eine OnBoard-Unit.

Die Erfindung liegt auf dem Gebiet der Mobility Services für bewegte Objekte (wie z.B. Lkw, Pkw, Motorrad, Bus, Schiff, Zug etc.) in unterschiedlichen geographischen Gebieten. Eine hauptsächliche Anwendung betrifft die geographischen Gebiete innerhalb Europas, es ist jedoch auch jederzeit auf außer-europäische Gebiete erweiterbar. Das erfindungsgemäße System erfolgt Ländergrenzen-übergreifend.

Bei Transportsystemen und auch bei sonstigen Verkehrssystemen ist es grundsätzlich vorgesehen, dass eine Vielzahl von Fahrzeugen mit OnBoard-Units ausgestattet sind, die jeweils in einer drahtlosen Datenverbindung mit einem Back-Office stehen. Das Back-Office ist in der Regel als zentrales System ausgebildet und für die Verarbeitung von Daten zuständig, die von den OnBoard-Units gesendet werden. Üblicherweise werden von der OnBoard-Unit positionsbezogene Daten, also Daten, die die Position des Fahrzeuges betreffen, aber auch jegliche andere Art von erfassten Daten (manuell oder automatisch), an das Back-Office gesendet, das daraufhin die Daten weiterverarbeitet, so dass die Daten für unterschiedliche Telematik-Dienste (Services) verwendet werden können. Als Services kommen insbesondere Mobility Services in Frage. Hierunter fallen Abrechnungsservices, maut-bezogene Services, Flotten-Management-Services, Services von Privatstraßenbetreibern oder jegliche andere Art von Mehrwert-Diensten, die Funktionen und Dienstleistungen für den jeweiligen Betreiber des Fahrzeuges anbieten können. Dieser vorstehend genannte Katalog ist jedoch nicht als abschließend zu verstehen und kann durch beliebig andere Services ersetzt bzw. erweitert werden, auch durch solche, die zukünftig erst entwickelt werden.

Die US 2004/0081120 offenbart einen personalisierten, standortbezogenen Dienst für einen Benutzer eines mobilen Terminals. Zweck dieses Dienstes ist es, den Benutzer über besondere Eigenschaften des Standortes (z.B. Sehenswürdigkeiten oder WLAN-Hotspots etc.) zu informieren, die in der Nähe seines aktuellen Standortes sind. Diese Druckschrift offenbart jedoch keine Zuordnung zwischen Diensten, die in Unterbereichen der Geo-Domäne aktivierbar sind. Eine Zerlegung der Geo-Domäne in eine Menge von Geo-Objekten wird in dieser Druckschrift nicht beschrieben.

Die WO 2004/092876 offenbart ein System zum Sammeln, Analysieren und Verteilen von hauptsächlich straßenzustandsbezogenen Daten. Weiterreichende und detailliertere Vorgänge in Bezug auf einzelne Unterabschnitte eines umfassenden Geo-Objektes werden in dieser Druckschrift nicht thematisiert.

Eine Zuordnung von bereitgestellten oder aktivierbaren Diensten und einzelnen geographischen Objekten, in die eine Geo-Domäne zerlegt werden kann, ist dem Stand der Technik nicht bekannt. Eine solche Zuordnung würde zu einer Kostenreduktion führten, da unnötige Dienst-Zugriffe vermieden werden können.

Die vorliegende Erfindung zielt darauf ab, eine deutliche Kosteneinsparung im Hinblick auf die Datenübertragung zwischen der OnBoard-Unit und dem Back-Office zu ermöglichen.

Die vorliegende Erfindung hat sich deshalb zur Aufgabe gestellt einen Weg aufzuzeigen, mit dem ein Verfahren zum Betreiben eines OnBoard-Unit-Back-Office-Systems für Fahrzeuge zum Bereitstellen einer Menge von Services zu schaffen, das in Bezug auf die bekannten Verfahren verbessert und insbesondere einfacher, deutlich kostengünstiger und schneller ist. Darüber hinaus soll eine verbesserte OnBoard-Unit geschaffen werden, die eine kostengünstigere Datenübertragung zum Back-Office ermöglicht.

Nachstehend wird die erfindungsgemäße Lösung der vorstehenden Aufgabe anhand der verfahrensgemäßen Lösung beschrieben. Hierbei erwähnte Merkmale, Vorteile und alternative Ausführungsformen, sowie Weiterbildungen der Erfindung, die im Rahmen des erfindungsgemäßen Verfahrens beschrieben werden, sind ebenso auf die anderen Lösungen der Erfindung, nämlich die erfindungsgemäße OnBoard-Unit und auf das OnBoard-Unit-Back-Office-System zu übertragen.

Die Aufgabe wird durch die beiliegenden nebengeordneten Hauptansprüche gelöst, insbesondere durch das Verfahren zum Betreiben eines OnBoard-Unit-Back-Office-Systems für Fahrzeuge, durch eine entsprechend ausgebildete OnBoard-Unit und durch ein OnBoard-Unit-Back-Office-System.

Die Aufgabe wird insbesondere gelöst durch ein Verfahren zum Betreiben eines OnBoard-Unit-Back-Office-Systems für Fahrzeuge innerhalb einer Geo-Domäne, wobei das Fahrzeug mit einer mobilen OnBoard-Unit ausgestattet ist und wobei über ein zentrales Back-Office zumindest ein Service angeboten wird, wobei in der OnBoard-Unit Daten in Bezug auf das Fahrzeug empfangen werden können, wobei das Verfahren folgende Verfahrensschritte umfasst:
- Zerlegen der Geo-Domäne nach einem dynamisch konfigurierbaren Zerlegungs-Mechanismus in eine Menge von Geo-Objekten,
- Selektion von relevanten Geo-Objekten aus der Menge von Geo-Objekten in Bezug auf zumindest einen Service und
- Aktivieren eines Loggings und/oder einer Verarbeitung von Daten für den Fall, dass sich die OnBoard-Unit in einem als relevant selektierten Geo-Objekt befindet.

Ein wesentlicher Aspekt und Vorteil der vorliegenden Erfindung ist darin zu sehen, dass eine deutliche Datenreduktion in Bezug auf die Datenkommunikation zwischen der OnBoard-Unit und dem Back-Office erzielt werden kann, indem nur die Daten, die innerhalb der relevant selektierten Geo-Objekte erfasst wurden, von der OnBoard-Unit an das Back-Office gesendet werden.

Unter einem "Service" sind in der bevorzugten Ausführungsform Telematik-Dienste, z.B. mautbezogene Services, Flottenmanagement-Services, aber auch jede andere Art von Mobility Services zu verstehen.

Eine Geo-Domäne kennzeichnet sich durch einen bestimmten geographischen Bereich. Die Geo-Domäne muss nicht notwendigerweise mit den Ländergrenzen übereinstimmen. Darüber hinaus ist es möglich, dass mehrere Länder in ein und derselben Geo-Domäne zusammengefasst werden oder, dass eine Geo-Domäne lediglich einen Bereich eines Landes abdeckt.

In der bevorzugten Ausführungsform ist die OnBoard-Unit mit einem Empfänger ausgestattet, der zum Empfang von positionsbezogenen Daten des Fahrzeugs bestimmt ist. Hierbei handelt es sich insbesondere um satellitengestützte Positionsdaten. Diese können auf dem GPS-System oder auf anderen Systemen, wie beispielsweise dem Galileo-System, basieren. Darüber hinaus können auch beliebig andere Systeme zum Empfang von positionsbezogenen Daten eingesetzt werden. Je nach Ausführungsform kann es vorgesehen sein, dass positionsbezogene Daten von unterschiedlichen Services verarbeitet werden, wie z.B. von Abrechnungsservices oder maut-bezogenen Services etc. oder von anderweitigen Services, die diese Daten als Inputgrößen erfordern.

Der erfindungsgemäße. Zerlegungsmechanismus kann - in mathematischen Sinn - auch als Überlagerung der Geo-Domäne mit zumindest einem geometrischen Muster beschrieben werden. Mit anderen Worten wird über eine zweidimensionale Darstellung eines geographischen Bereichs der Geo-Domäne ein geometrisches Muster gelegt, so dass die Geo-Domäne in eine Vielzahl von Geo-Objekten zerlegt wird. Üblicherweise haben die Geo-Objekte eine quadratische oder rechteckige Form. In alternativen Ausführungsformen kann hier jedoch auch ein anderer ZerlegungsMechanismus vorgesehen sein, so dass die Geo-Objekte in Form von Kreisen, Ovalen oder anderen geometrischen Formen definiert sind.

Die erfindungsgemäße Selektion von relevanten Geo-Objekten verfolgt das Ziel, nur erfasste Daten aus den Geo-Objekten weiter zu verarbeiten, die für den jeweiligen Service notwendig sind. Im Gegensatz dazu erfolgte bei den bisherigen Systemen keine solche Selektion, so dass früher grundsätzlich alle erfassten Daten innerhalb einer Geo-Domain von der OnBoard-Unit an das Back-Office übertragen werden mussten. Nachteiligerweise sind dabei nach den bisherigen Verfahren teilweise sehr hohe Datenvolumina angefallen.

Im Gegensatz dazu ist es vorteilhafterweise erfindungsgemäß vorgesehen, dass das Empfangsmodul - insbesondere der GPS-Receiver - nur dann aktiviert wird, wenn sich die OnBoard-Unit in einem Geo-Objekt befindet, das für den jeweiligen Service relevant ist. Ansonsten kann es eingestellt werden, ob und wenn ja, wie lange es deaktiviert sein soll oder andernfalls kann eingestellt sein, dass es zwar aktiviert bleibt, aber nur keine Daten an das Back-Office überträgt.

Falls sich das Fahrzeug nicht in einem relevanten bzw. als relevant selektierten Geo-Objekt befindet, ist es erfindungsgemäß vorgesehen, dass keine Daten an das Back Office gesendet werden. Dabei kann es konfiguriert sein, dass in diesem Fall (kein relevantes Geo-Objekt) das Empfangsmodul deaktiviert ist, oder das Empfangsmodul bleibt aktiviert, aber es erfolgt kein Logging, keine fahrzeug-seitige Speicherung der Daten und/oder kein Übertragen der Daten an das Back-Office.

Es sei an dieser Stelle noch einmal explizit darauf hingewiesen, dass die Daten (deren Inhalt, Größe, oder weitere Parameter, die die Daten betreffen) für das grundlegende erfindungsgemäße Prinzip in keinster Weise festgelegt sind. Neben positionsbezogenen Daten, kann es sich hier auch um jede andere Art von Daten handeln, die z.B. Motordaten des jeweiligen Fahrzeuges betreffen, Autobahndaten, Daten über touristische Informationen etc. betreffen.

In einer alternativen Ausführungsform kann es ebenso vorgesehen sein, dass das Empfangsmodul dennoch Daten empfängt, diese aber nicht von der OnBoard-Unit an das Back-Office weiterleitet. Damit kann ebenso eine Datenreduktion erreicht werden. Darüber hinaus ist es aber möglich, dass die Daten für andere Zwecke und/oder andere (Telematik-)Services eingesetzt werden können, z.B. für weitere Geräte innerhalb des Fahrzeuges oder für andere Geräte, die mit der OnBoard-Unit kommunizieren.

Üblicherweise erfolgt das Zerlegen der Geo-Domäne in Geo-Objekte in einer vorgelagerten Phase. Diese ist grundsätzlich unabhängig vom Betrieb des jeweiligen Systems. In einer weiteren, nachgelagerten Phase kann dann das erfindungsgemäße OnBoard-Unit-System betrieben werden. Dabei erfolgt die Selektion von relevanten Geo-Objekten und das Aktivieren der Verarbeitung von erfassten Daten (Positionsdaten, Fahrzeugdaten, etc.), falls sich die OnBoard-Unit in einem relevanten Geo-Objekt befindet. Vorteilhafterweise ist es möglich, dass auch während des Betriebs, also während der zweiten Phase, ein erneutes Zerlegen der Geo-Domäne erfolgt.

Die Verfahrensschritte des Zerlegens, der Selektion und des Aktivierens müssen nicht notwendigerweise in dieser Reihenfolge unmittelbar nacheinander ausgeführt werden, so dass alternative Ausführungsformen auf eine andere Kombination der vorstehend erwähnten Verfahrensschritte ausgerichtet sein können.

Der erfindungsgemäße Zerlegungsmechanismus ist vorgesehen, um die gesamte Geo-Domäne in kleine Teilbereiche bzw. Abschnitte oder so genannte Geo-Objekte zu zerlegen, die jeweils eine klar und eindeutig definierte geometrische Form aufweisen. Dafür wird die Geo-Domäne mit einem geometrischen Muster, zum Beispiel einem Gitternetz - bzw. rasterartigen Muster überlagert. In diesem Fall wird es sich vornehmlich um ein und dasselbe Muster für die gesamte Geo-Domäne handeln. In einer alternativen Ausführungsform ist es jedoch auch möglich, dass mehrere unterschiedliche Zerlegungsmechanismen angewendet werden, so dass die Geo-Domäne in unterschiedlich geformte und/oder in unterschiedlich große Geo-Objekte zerlegt wird. Beispielsweise wäre es denkbar, dass Stadtbereiche mit kreisförmigen Abschnitten überlagert werden, während Autobahnabschnitte mit einem Gitternetz-Raster überlagert werden und sehr ländliche Gebiete, ohne ein Autobahn-Straßennetz, wie zum Beispiel in Alpenregionen, mit einem größeren Gitternetz-Raster überlagert werden. Mit anderen Worten wird in dieser Ausführungsform ein und dieselbe Geo-Domäne mit unterschiedlichen Zerlegungsmechanismen in Geo-Objekte unterschiedlicher Art zerlegt.

Im Gegensatz dazu ist es in einer Weiterbildung der Erfindung darüber hinaus auch möglich, mehrere Services anzubieten und somit ein Multi-Service-System zur Verfügung zu stellen, wie beispielsweise umfassend: mautbezogene Services, verkehrsstrombezogene Services, Flottenmanagementbezogene Service etc.. Es kann nun vorgesehen sein, unterschiedliche Zerlegungsmechanismen für die unterschiedlichen Services vorzusehen, so dass beispielsweise ein kleineres Gitternetz-Raster als Zerlegungsmechanismus für abrechnungsbezogene Services verwendet wird, im Vergleich zu einem größeren Gitternetz-Raster für Flottenmanagement-Services. Darüber hinaus können auch - wie vorstehend bereits erwähnt - die beiden Ausführungsformen insofern kombiniert werden, als dass innerhalb eines Services bei einem Multi-Service-System zusätzlich auch noch unterschiedliche Zerlegungsmechanismen angewendet werden. In diesem Fall ist jedem Service auf mathematisch eineindeutige Weise ein Identifikator zugeordnet. Die für diesen Service als relevant ausgewählten Geo-Objekte werden dann mit diesem zugehörigen Identifikator an die OnBoard-Unit übertragen. Damit erfolgt sozusagen eine automatische Aufteilung/Zuteilung der Daten an die jeweils relevanten dafür vorgesehenen Services. Diese Aufteilung muss jedoch nicht notwendig erfolgen und ist somit ein optionales Merkmal auf der OnBoard-Unit. Wenn die Aufteilung nicht auf der OnBoard-Unit erfolgt ist, wird sie im Back-Office ausgeführt.

Ziel der erfindungsgemäßen OnBoard-Unit ist es, möglichst universal einsetzbar zu sein, das heißt auch über die Ländergrenzen hinaus.

Diese Weiterbildung der Erfindung umfasst als optionales Merkmal eine Aktivierungseinheit, die dazu bestimmt ist, die Art der Erfassung von Telematik Daten zu bestimmen (beispielsweise DSRC-Technologie, GPS-Technologie, CAN-Bus, Tachoabgriff, etc.) und basierend auf dieser Bestimmung ein oder mehrere ErfassungsModule zu aktivieren bzw. ein oder mehrere andere Module zu deaktivieren. Vorzugsweise erfolgt diese Aktivierung und/oder Deaktivierung automatisch beim Wechsel von Geo-Objekte auf Basis von hinterlegten Regeln und Attributen. Es kann jedoch auch vorgesehen sein, dass dies (Aktivierung bzw. Deaktivierung von den jeweiligen Modulen) durch ein bestimmtes Signal getriggert wird, das vom Back-Office an die OnBoard-Unit gesendet wird.

Ein wichtiger Vorteil der erfindungsgemäßen Lösung ist darin zu sehen, dass ein und dieselbe OnBoard-Unit dynamisch und adaptiv auf den jeweiligen Anwendungsfall hin optimal ausgelegt werden kann, und dass sie gleichermaßen universell einsetzbar ist. Diese Anpassung und Einsatzfähigkeit kann vorteilhafterweise ohne jegliche Änderung an der OnBoard-Unit zur Verfügung gestellt werden. Damit kann ein Fahrzeughalter mit ein und derselben OnBoard-Unit über Ländergrenzen wechseln, ohne dass er Änderungen und/oder Einstellungen an der OnBoard-Unit vornehmen muss, er aber zugleich unterschiedliche oder ortsabhängige Dienste bereitgestellt bekommen kann.

In einer vorteilhaften Ausführungsform umfasst die OnBoard-Unit ein Speichermedium, insbesondere ein mobiles Speichermedium zur temporären Speicherung von Daten, die für die Verarbeitung in dem jeweiligen Service notwendig sind. Bei dem mobilen Datenträger kann es sich beispielsweise um eine SIM-Karte, eine Flash-Disk oder um andere Datenträger handeln. In dieser Ausführungsform wird die Datenübertragung zwischen der OnBoard-Unit und dem Back-Office über ein Mobilfunknetz, zum Beispiel über SMS-Nachrichten oder IP-Telegramme über GPRS bzw. UMTS, abgewickelt. Aber auch eine stationäre Übertragung der Daten ist denkbar, bei der die OnBoard-Unit an einen PC, Laptop, Handheld oder ähnliches angeschlossen wird und die Daten über beispielsweise (gesicherte) Internetverbindung an das Back Office gesendet werden.

In einer Weiterbildung der Erfindung umfasst die OnBoard-Unit mehrere Fahrzeuginterne Positionserfassungssysteme, um die Sicherheit des Gesamtsystems erhöhen zu können (also z.B. neben einem GPS-Receiver auch einen DSRC-System). Damit kann sichergestellt werden, dass die Positionsdatenerfassung selbst dann erfolgt, wenn eines der Positionserfassungssysteme kurzzeitig ausfällt (dies ist beispielsweise bei Befahren eines Streckenabschnittes möglich, der durch ungünstige Satellitenstellung einem Abschirmeffekt unterliegt).

Im Hinblick auf die Daten, die zwischen der OnBoard-Unit und dem Back-Office ausgetauscht werden, ist vorzugsweise ein bidirektionaler Datenaustausch vorgesehen. Von der OnBoard-Unit werden erfindungsgemäß nur die als relevant selektierten Daten an das Back-Office übertragen. In alternativen Ausführungsformen ist es möglich, hier noch weitere zusätzliche Daten zu übertragen, die zum Beispiel für andere Services relevant sein könnten, wie zum Beispiel Zeitstempel, Distanzangaben etc. Von dem Back-Office werden Informationen über die relevanten Geo-Objekte an die OnBoard-Unit übertragen. Das Back-Office umfasst somit eine Recheneinheit, die zum Ausführen der Verfahrensschritte des Zerlegens der Geo-Domäne und der Selektion von relevanten Objekten bestimmt ist. Üblicherweise wird das Back-Office aus einem Rechnernetzwerk gebildet sein, an dem unterschiedliche Workstations angeschlossen sind oder das darüber hinaus mit externen Systemen, wie zum Beispiel Telematik-Systemen, in Datenaustausch stehen kann. Auch in dieser Richtung ist es möglich, dass zusätzlich noch weitere Daten vom Back-Office an die OnBoard-Unit übertragen werden, die zum Beispiel auf die Gültigkeit der zu übertragenden Informationen gerichtet sind (es ist beispielsweise möglich, dass alle oder ausgewählte Daten mit einem Gültigkeitsstempel und/oder mit einem Zeitfenster versehen sind).

Üblicherweise erfolgt im Back-Office das Zerlegen der Geo-Domäne in die Geo-Objekte und die Auswahl von relevanten Geo-Objekten erfolgt ebenfalls im Back-Office. Die Daten über die als relevant ausgewählten Geo-Objekte werden in der bevorzugten Ausführungsform über das Mobilfunknetz an die OBU gesendet.

Nachdem die OnBoard-Unit nun die Daten bezüglich der Relevanz der jeweiligen Geo-Objekte empfangen hat, ist es möglich die aktuellen positionsbezogenen Daten für das Fahrzeug mittels eines Vergleichs-Moduls mit den Daten über die relevanten Geo-Objekte zu vergleichen. Abhängig von diesem Vergleichs-Modul werden unterschiedliche Datenverarbeitungen angestoßen:
1. Aus dem Vergleichs-Modul ist ableitbar, dass die aktuelle Fahrzeugposition sich innerhalb eines relevanten Geo-Objektes befindet. In diesem Fall wird die Erfassung von weiteren Daten veranlasst und die Daten werden unmittelbar oder gesammelt nach einer bestimmten Zeitdauer an das Back-Office übertragen.
2. Aus dem Vergleichs-Modul ist ableitbar, dass die aktuelle Fahrzeugposition sich nicht innerhalb eines relevanten Geo-Objektes befindet. In diesem Fall kann die Erfassung von Daten deaktiviert werden. Hierbei kann - abhängig vom jeweiligen Geo-Objekt - dynamisch eingestellt sein, für welchen Zeitraum Datenerhebung deaktiviert werden soll, bis eine erneute Prüfung der aktuellen Position in Bezug auf relevante Geo-Objekte erfolgt. In einer alternativen Ausführungsform wird nicht die Erfassung von Daten deaktiviert, sondern nur deren Übertragung von der OnBoard-Unit an das Back-Office.

Falls es gewünscht wird, den Datenaustausch zwischen der OnBoard-Unit und dem Back-Office nicht über das Mobilfunknetz abzuwickeln, so können hier ebenso andere intermediäre Netze, z.B. Funknetze oder andere technisch äquivalente Netze, eingesetzt werden und/oder die OnBoard-Unit und das Back-Office sind mit entsprechenden Schnittstellen zur Datenübertragung über das ausgewählte Netzwerk ausgebildet.

In einer weiteren vorteilhaften Ausführungsform der vorliegenden Erfindung muss das Netzwerk zur Datenübertragung von den erfassten Daten (also in Richtung von OnBoard-Unit an das Back-Office) und das Netzwerk zur Übertragung von Informationen über die relevanten Geo-Objekte (also in Richtung von dem Back-Office an die OnBoard-Unit) nicht notwendigerweise dasselbe sein. Für den Fall, dass die erfindungsgemäße Lösung auf einen Abrechnungsservice angewendet wird, bei dem die Abrechnung erst nach einer längeren Zeitspanne erfolgt, ist es z.B. denkbar, dass die OnBoard-Unit mit einer mobilen Speichereinheit ausgebildet ist, die Daten nach Beendigung der Fahrt des jeweiligen Fahrzeuges vom Fahrzeughalter direkt (zum Beispiel durch Einstecken der jeweiligen Speicherkarte) oder indirekt (zum Beispiel durch Übertragung über das Internet) an eine entsprechende Aufnahmeeinrichtung überträgt, die dem Back-Office zugeordnet ist. Die Art der erfassten Daten ist grundsätzlich abhängig von dem jeweiligen Dienst. Es gibt Dienste, die auf einem sehr einfachen Ansatz basieren, und beispielsweise lediglich eine einmalige Gebühr verlangen (zum Beispiel beim Befahren eines gebührenpflichtigen Tunnels). In diesem Fall ist es zur weiteren Reduktion des Datenvolumens zwischen OnBoard-Unit und Back-Office erfindungsgemäß vorgesehen, dass nicht der vollständige Datensatz übertragen wird, der zur Identifikation der Position des Fahrzeugs notwendig ist, sondern dass nur ein "Gebühren-Signal" übertragen wird, mit dem codiert ist, dass sich das Fahrzeug in der gebührenpflichtigen Zone befindet.

In einer Weiterbildung der Erfindung umfasst die OnBoard-Unit zusätzlich eine Anzeigeeinheit, die dazu bestimmt ist, das Ergebnis der Vergleichseinheit darzustellen. Die Anzeigeeinheit kann ebenfalls dynamisch konfiguriert werden und ist vorzugsweise so voreingestellt, dass der Fahrer durch ein entsprechendes optisches und/oder akustisches Signal informiert wird, falls sich das Fahrzeug in einem als relevant selektierten Geo-Objekt befindet. Optional können auch weitere sich aus dem jeweils aktiven Dienst ergebende Daten angezeigt werden, z.B. die Höhe der bisher angefallenen Gebühren für gebührenpflichtige Geo-Objekte.

Insgesamt ist ein wesentlicher Vorteil der erfindungsgemäßen Lösung darin zu sehen, dass das Logging, der Empfang und/oder die Übertragung von Daten seitens des Fahrzeugs nur bedingt erfolgt, insbesondere dann, wenn dies durch ein Triggersignal veranlasst wird. Das Triggersignal wird direkt oder indirekt von dem Back-Office bereitgestellt und mit dem Triggersignal wird codiert, ob sich das Fahrzeug in dem als relevant selektierten Geo-Objekt befindet.

Üblicherweise wird - wie vorstehend bereits erwähnt - das Zerlegen der Geo-Domäne in Geo-Objekte und die Selektion von relevanten Geo-Objekten back-office-seitig ausgeführt. Es ist jedoch alternativ ebenso möglich, diese Verarbeitungsschritte teilweise oder vollständig in der OnBoard-Unit oder in einer weiteren speziellen Einrichtung auszuführen, die mit Schnittstellen ausgestattet ist, um sowohl mit der OnBoard-Unit als auch mit dem Back-Office zu kommunizieren.

Ein wesentlicher Vorteil der vorstehend erwähnten erfindungsgemäßen Lösungen ist des Weiteren darin zu sehen, dass eine Änderung des Straßennetzes, eine Änderung von Nutzungsgebühren oder sonstige Änderungen, die z.B. die Services betreffen auch während des Betriebs bzw. während einer Fahrt des Fahrzeugs stattfinden können. Manuelle Einstellungen oder sonstige Änderungen, die geräteseitig an der OnBoard-Unit ausgeführt werden müssen, sind vorteilhafterweise nicht notwendig.

Die erfindungsgemäße Lösung kann auch als Erzeugnis oder als Produkt ausgebildet sein, das aus Software- und/oder Hardware-Modulen besteht und direkt in einen Speicher einer fahrzeugseitigen Einheit und/oder einer back-office-seitigen Einheit ladbar ist, mit Programmcode-Mitteln, um alle Schritte eines Verfahrens nach dem vorstehend erwähnten Verfahren auszuführen, falls das Programm in der fahrzeugseitigen Einheit und/oder in der back-office-seitigen Einheit ausgeführt wird.

Es ist auch möglich, dass das erfindungsgemäße Verfahren als separates bzw. selbständiges Modul in Form einer Software und/oder Hardware-Applikation ausgebildet ist, die die bestehenden OnBoard-Unit-Back-Office-Systeme erweitert. Ebenso ist es möglich, dass alle oder einzelne Verfahrensschritte in Software und/oder Hardware-Modulen realisiert werden können.

Eine alternative Aufgabenlösung sieht ein Speichermedium vor, das zur Speicherung des vorstehend beschriebenen Verfahrens bestimmt ist und von einem Computer oder Mikrocomputer lesbar ist.

Zusätzliche vorteilhafte Ausführungsformen ergeben sich aus den beiliegenden Unteransprüchen.

In der folgenden detaillierten Figurenbeschreibung werden nicht einschränkend zu verstehende Ausführungsbeispiele mit deren Merkmalen und weiteren Vorteilen anhand der Zeichnung besprochen. Es zeigen:
Fig. 1 eine übersichtsartige Darstellung über das erfindungsgemäße System gemäß einer bevorzugten Ausführungsform,
Fig. 2 ein Funktionsschema gemäß einer bevorzugten Ausführungsform der vorliegenden Erfindung,
Fig. 3 eine übersichtsartige Darstellung von fahrzeugseitigen und back-office-seitigen Bauteilen gemäß einer bevorzugten Ausführungsform der Erfindung,
Fig. 4 eine übersichtsartige Darstellung eines Rechteck-Musters, mit dem eine Geo-Domäne gemäß einer bevorzugten Ausführungsform der Erfindung überlagert wird,
Fig. 5 eine erfindungsgemäße Konstruktion einer Multi-Service-Geo-Domäne.

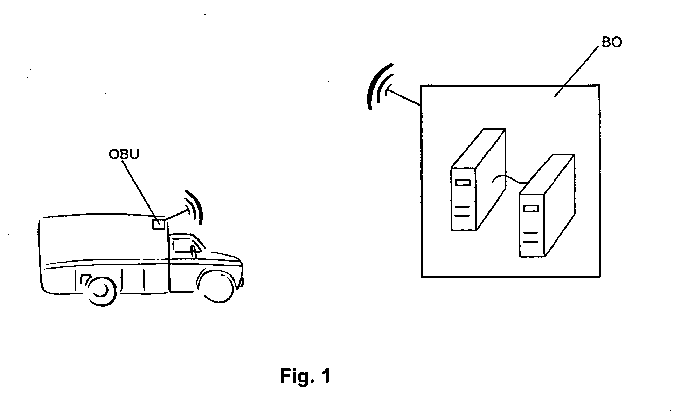

Im Zusammenhang mit Fig. 1 sei im Folgenden die grundsätzliche Architektur eines erfindungsgemäßen Mobility Services dargestellt. Ein Fahrzeug, wie z.B. ein LKW, ein PKW, ein Motorrad, ein Schiff, ein Zug oder sonstige kraftstoffbetriebene mobile Objekte sind Träger einer OnBoard-Unit OBU. Die fahrzeugseitig angebrachte On-Board-Unit OBU ist ein elektronisches Modul, das aus mehreren elektronischen Einheiten zusammengesetzt sein kann, die zumindest teilweise miteinander in datentechnischer Verbindung stehen und in einem Gehäuse, vorzugsweise an der Scheibe eines Kraftfahrzeuges angeordnet sind. Die Abmessungen des Gehäuses liegen im Zentimeterbereich, wobei die Kantenlänge zwischen 10 cm und 20 cm liegt, aber auch kleiner sein kann. Die OnBoard-Unit OBU steht in einer drahtlosen Kommunikationsverbindung zu einem Back-Office BO (z.B. auch über das Internet), das als zentrale Verarbeitungsstation ausgebildet ist und insbesondere aus einem Rechnersystem besteht. Das Back-Office BO dient dazu, die gesamten datentechnischen Verarbeitungsschritte in Bezug auf das Fahrzeug und/oder in Bezug auf die vom Fahrzeug über die OnBoard-Unit OBU gesammelten Daten zu verarbeiten.

Die erfindungsgemäße OnBoard-Unit OBU ist als Thin Client und damit so schlank wie möglicht ausgebildet. Damit kann vorteilhafterweise erreicht werden, dass die OnBoard-Unit OBU möglichst kostengünstig hergestellt werden kann, da für die relativ rechenaufwendigen Datenverarbeitungsschritte das zentrale Rechnersystem bzw. Rechnernetzwerk genützt werden kann. Darüber hinaus ist es möglich, dass notwendige Änderungen am System alle auf zentrale Art im Back-Office BO ausgeführt werden können, ohne dass jeweils separat jede OnBoard-Unit OBU einzeln geändert werden muss. Dies hat den Vorteil, dass Modifikationen am System oder Erweiterungen sehr leicht und schnell durchgeführt werden können.

Die OnBoard-Unit OBU dient dazu, fahrzeugbezogene Daten während eines Fahrzeugbetriebes zu sammeln. Welche Daten gesammelt werden, hängen von dem jeweiligen Service ab, der von dem Back-Office BO zur Verfügung gestellt werden soll.

Ein hauptsächliches Anwendungsfeld des erfindungsgemäßen Systems liegt auf dem Gebiet des Abrechnungswesens für mobile Fahrzeuge, die auf dem Straßennetz unterwegs sind, das neben gebührenpflichtigen Streckenabschnitten auch gebührenfreie Streckenabschnitte umfasst. Um die Gebühr einer befahrenen Strecke eines Fahrzeuges genau berechnen zu können, ist es notwendig, dass die OnBoard-Unit OBU fahrstrecken-bezogene Daten aufnimmt, bzw. erfasst, um diese an das Back-Office BO zur Weiterverarbeitung weiterzuleiten. Bei den Daten wird es sich vornehmlich um positionsbezogene Daten handeln. Es ist jedoch ebenso möglich, hier auch weitere Daten zu erfassen, die beispielsweise für denselben Service (aber auch für andere Services) als Dateneingangsgröße dienen können.

Zur Erfassung der positionsbezogenen Daten umfasst die OnBoard-Unit OBU ein Empfangsmodul zur Aufnahme von positionsbezogenen Daten, insbesondere einen GPS-Receiver 14. In anderen Ausführungsformen können ebenso andere technische Äquivalente zu einem GPS-Receiver eingesetzt werden, beispielsweise ein Empfänger für Galileo-Daten. In der bevorzugten Ausführungsform ist das System beispielhaft auf die Erfassung einer Maut ausgerichtet; andere Ausführungen der Erfindung betreffen jedoch andere Szenarien. In diesem Beispiel umfasst die OnBoard-Unit OBU zusätzlich zu dem GPS-Receiver 14 ein Empfangsmodul zum Empfangen von DSRC-Baken-System-Daten. Als optionales weiteres Merkmal ist ein Erkennungsmodul vorgesehen, das dazu bestimmt ist, automatisch zu erkennen, welche Art und Weise bzw. nach welchem Empfangsmechanismus die positionsbezogenen Daten zum aktuellen Zeitpunkt empfangen werden sollen. Dieses Merkmal hebt darauf ab, dass sich einige Länder bezüglich des grundlegenden Mechanismus zur Berechnung der Maut unterscheiden. Zum einen ist es möglich, die positionsbezogenen Daten über einen satellitengestützten Mechanismus zu empfangen, wie beispielsweise über einen GPS-Receiver 14, der zum Empfang von GPS-Fixes bestimmt ist. Alternativ kann es auch vorgesehen sein, dass die positionsbezogenen Daten über ein DSRC-Tag empfangen werden, der im Datenaustausch mit einer DSRC-Bake steht. Dies ist beispielsweise auf österreichischen Autobahnen der Fall. Darüber hinaus muss des weiteren berücksichtigt werden, dass auch die Protokollformate der einzelnen Empfangssysteme unterschiedlich sein können. So unterscheidet sich beispielsweise das italienische Protokollformat, das auf einem UNI-Standard basiert, von dem österreichischen Standard, der nach dem CEN-Standard ausgelegt ist. Falls notwendig, erfolgt erfindungsgemäß eine Konvertierung der jeweiligen Formate. Neben der satellitengestützten Positionsdatenerfassung und der DSRC-Baken-gestützten Positionsdatenerfassung gibt es noch weitere Erfassungssysteme, die alle bei der erfindungsgemäßen Lösung berücksichtigt worden sind und somit integriert werden können. Ein wesentlicher Vorteil der erfindungsgemäßen Lösung ist somit darin zu sehen, dass eine einheitliche OnBoard-Unit OBU geschaffen werden soll, die für unterschiedlichste Erfassungssysteme ausgelegt ist. Vorzugsweise umfasst das Erkennungsmodul ein Aktivierungs- und Deaktivierungsmodul, um das relevante Erkennungssystem einzustellen.

Deshalb umfasst das erfindungsgemäße Verfahren in der bevorzugten Ausführungsform einen automatischen Erkennungsmechanismus, der automatisch bestimmt, in welcher Geo-Domäne sich die OnBoard-Unit OBU zur Zeit gerade befindet. Abhängig davon wird entschieden, auf welche Art und Weise die Fahrzeugdaten erfasst werden sollen (satelliten-gestützt, baken-gestützt etc.). Aufgrund dieser automatisch vorgenommenen Fallunterscheidung wird dann das jeweilige (zuständige) Erfassungsmodul aktiviert, während die anderen Erfassungsmodule deaktiviert werden. Dazu folgendes Beispiel:

Sobald das Fahrzeug sich aus der Geo-Domäne Deutschland in die Geo-Domäne Österreich hineinbewegt, wird automatisch erkannt, dass nun der Empfang von positionsbezogenen Daten auf die Daten eines Baken-DSRC-System gewechselt werden muss (In diesem Fall müssen die Dienstparameter an der Geo-Domain hängen; oder es gibt entsprechende Geo-Objekte). Daraufhin wird das DSRC-Tag-Modul der On-Board-Unit OBU aktiviert, während die Positionsdatenspeicherung für das GPS/GSM-Mautsystem für Deutschland über den GPS-Receiver 14 deaktiviert wird, während der GPS-Receiver 14 für die Erkennung des nächsten Länderwechsels aktiviert bleibt. Vorteilhafterweise kann damit der Empfang und die weitere Verarbeitung von unnötigen Positionsdaten vermieden werden, was insgesamt die Leistungsfähigkeit des Systems deutlich steigern kann.

Zur wechselseitigen Kommunikation ist ein fahrzeugseitiges Kommunikationsmodul 10 in der OnBoard-Unit OBU vorgesehen und ein back-office-seitiges Kommunikationsmodul 12 vorgesehen, über die die OnBoard-Unit OBU und das Back-Office BO und gegebenenfalls weitere Instanzen in Datenaustausch stehen.

In einer vorteilhaften Weiterbildung kann die OnBoard-Unit OBU zusätzlich mit einem Speicher 16, insbesondere mit einem temporären Speicher, und als weiteres fakultatives Merkmal mit einer Berechnungseinheit 18 ausgebildet sein. Das Back-Office BO umfasst neben dem Kommunikationsmodul 12 ein Zerlegungsmodul 20 und ein Selektionsmodul 22.

Die erfindungsgemäße Lösung ist darauf ausgelegt, das Datenvolumen für den Datenaustausch zwischen der OnBoard-Unit OBU und dem Back-Office BO deutlich zu reduzieren. Je nachdem welcher Service von dem Back-Office BO bedient werden soll, müssen unterschiedliche Datensätze von der OnBoard-Unit OBU erhoben werden, die als Input für den jeweiligen Service (gegebenenfalls nach einer vorgeschalteten Datenverarbeitung) zu dienen. Falls es sich bei dem Service um einen Mautservice handelt, der sich auf die Bemautung von Autobahnen beschränkt, ist es notwendig, positionsbezogene Daten zu erheben. Das Fahrzeug wird sich im Regelfall jedoch nicht ausschließlich auf gebührenpflichtigen Streckenabschnitten bewegen, sondern befährt in der Regel auch solche Straßen, die keiner Zahlungspflicht unterliegen. Bei den bisherigen - aus dem Stand der Technik bekannten Verfahren wurden grundsätzlich alle positionsbezogenen Daten empfangen und an das Back-Office BO weitergeleitet. Dies ist jedoch nicht notwendig, da für diesen Mautservice grundsätzlich nur die positionsbezogenen Daten der gebührenpflichtigen Streckenabschnitte und maximal deren naher Umgebung als Inputgröße dienen. Die anderen positionsbezogenen Daten, die gebührenfreie Streckenabschnitte betreffen, sind nicht relevant und können vernachlässigt werden.

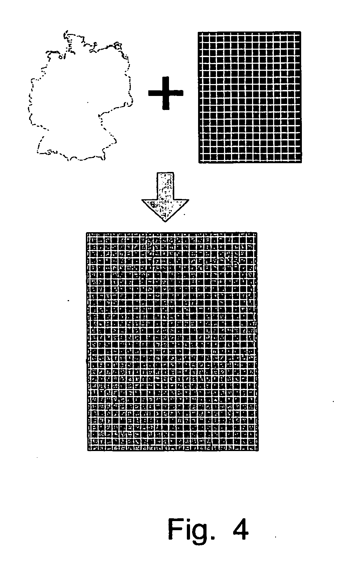

Dies wird erfindungsgemäß erreicht, indem back-office-seitig bestimmt wird, welche Streckenabschnitte für den jeweiligen Service relevant sind und welche nicht. Die relevanten Streckenabschnitte werden nach einem erfindungsgemäßen Selektionsverfahren ausgewählt. Dazu wird die Geo-Domäne nach einem Zerlegungsmechanismus in eine Vielzahl von Geo-Objekten zerlegt. In der einfachen Form wird eine Geo-Domäne aus einem Land gebildet. In anderen Ausführungsformen kann die Geo-Domäne jedoch auch aus komplizierteren Einheiten konstruiert sein, z.B. ländergrenzenübergreifend sein. Die Geo-Domäne wird erfindungsgemäß mit einem fest definierten mathematischen Muster überlagert, wie es in Figur 4 dargestellt ist. Das Muster kann dynamisch eingestellt werden und ist veränderlich. In der bevorzugten Ausführungsform handelt es sich um ein Rechteckmuster, so dass eine Anzahl von rechteckigen oder quadratischen Geo-Objekten entsteht. In diesem Fall wird die Geo-Domäne in eine Anzahl von Kacheln zerlegt. Je nach Größe der Kacheln ergibt sich ein mehr oder weniger differenziertes Bild. Die zerlegten Geo-Objekte werden dann mit dem gebührenpflichtigen Straßennetz abgeglichen (insbesondere nochmals überlagert). Dies dient dazu, um die jeweils relevanten Geo-Objekte für den Service zu bestimmen. All diese Schritte erfolgen back-office-seitig.

Sobald nun back-office-seitig festgestellt wird, dass ein gebührenpflichtiger Streckenabschnitt oder ein Teil desselben sich innerhalb eines Geo-Objektes befindet, wird dieses Geo-Objekt als relevantes Geo-Objekt ausgewählt. Dies erfolgt iterativ für alle Geo-Objekte.

In der bevorzugten Ausführungsform ist dieses Verfahren als Iteration über die Grö-βe der Geo-Objekte ausgebildet. Das heißt mit anderen Worten, dass die Kachelgröße (bzw. allgemein: die Größe der jeweiligen Geo-Objekte) sukzessive verringert werden kann, so dass ein feineres Bild von relevanten Streckenabschnitten entsteht. Nur in diesen relevanten Streckenabschnitten wird ein Logging von Daten ausgeführt. Damit ist ein enormes Einsparpotential im Hinblick auf die Übertragung und Verarbeitung von erfassten Daten möglich.

Im Folgenden wird an einem Beispiel von zwei Geo-Objekt-Größen das Ergebnis einer statistischen Untersuchung vorgestellt, die für die Geo-Domäne Deutschland im Hinblick auf das Autobahnnetz als mautpflichtige Straßen das Einsparpotential untersucht hat:

Bei einer Kachelgröße von 50 km ergeben sich bei einer Anzahl von 234 Kacheln eine Anzahl von 151 relevanten Kacheln bzw. Geo-Objekten und eine Anzahl von 41 irrelevanten Kacheln. Das Gebiet, in dem ein Logging von positionsbezogenen Daten erfolgen muss, liegt bei dieser Kachelgröße bei 377500 km² und das Gebiet, in dem kein Logging erfolgen soll (und gleichzeitig somit das Einsparpotential darstellt) liegt bei 102500 km². Wird eine Kachelgröße von 2,5 km Seitenlänge gewählt, so ergibt sich eine Anzahl von 90558 Kacheln bei 5899 relevanten Geo-Objekten, in denen ein Logging von positionsbezogenen Daten erfolgen soll (bzw. aktiviert ist) und eine Anzahl von 57216 Geo-Objekten, in denen kein Logging erfolgt. Die Fläche, in der bei dieser Kachelgröße ein Logging erfolgt beträgt ca. 36868 km², während die Fläche, in der kein Logging notwendig ist bei 357600 km² liegt.

Es ist also offensichtlich, welch enormes Einsparpotential durch das erfindungsgemäße Zerlegen der Geo-Domäne in Geo-Objekte und mittels der erfindungsgemäßen Selektion von relevanten Geo-Objekten erzielt werden kann. Je nach Wahl der Kachelgröße bzw. der Geo-Objektgröße sinkt das Gebiet, in dem ein Logging von Daten seitens der On-Board-Unit OBU erfolgen muss. Zum einen kann damit der Empfang von positionsbezogenen Daten seitens der On-Board-Unit OBU eingespart werden und auch deren temporärer Zwischenspeicherung, bevor sie an das Backoffice BO weitergeleitet werden und zum anderen kann die Datenübertragung zwischen der On-Board-Unit OBU und dem Back-Office BO deutlich reduziert werden. Da der Speicherplatz zwar bei Verkleinerung der Größe der Geo-Objekte grundsätzlich steigt, ist es notwendig, in dem Back-Office BO einen ausreichenden Speicherplatz zur Speicherung einer entsprechenden Look-up-table vorzusehen. Dies ist jedoch problemlos möglich, da das Back-Office BO als zentrale Instanz ausgebildet ist und somit mit nur einer einmaligen Aktion (z.B. hinsichtlich der Rechenleistung leicht erweiterbar ist.

Erfindungsgemäß erfolgt also nur dann ein Logging (bzw. eine Erfassung, Zwischenspeicherung und/oder Verarbeitung) von Daten, insbesondere von positionsbezogenen Daten und/oder sonstigen Fahrzeugdaten, etc., falls sich die On-Board-Unit OBU innerhalb eines als relevant selektierten Geo-Objektes bewegt.

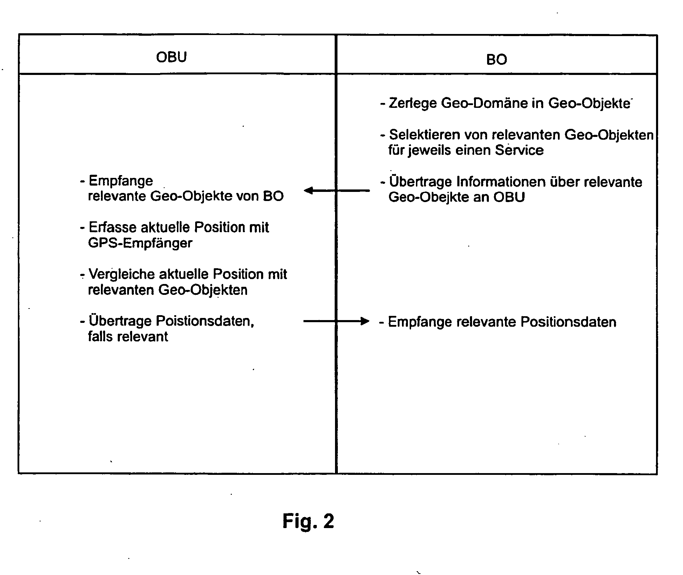

In Figur 2 sind übersichtsartig die Zuordnung der jeweiligen Verfahrensschritte gemäß einer bevorzugten Ausführungsform der Erfindung und der Datenaustausch zwischen der On-Board-Unit OBU und dem Back-Office BO dargestellt.

In einem vorgelagerten (nicht dargestellten) Verfahrensschritt wird erst einmal der Zerlegungsmechanismus bestimmt, nach dem die Geo-Domäne in die Geo-Objekte zerlegt werden soll. In dem vorstehend erwähnten Beispiel handelt es sich um ein Rechteck-Muster.

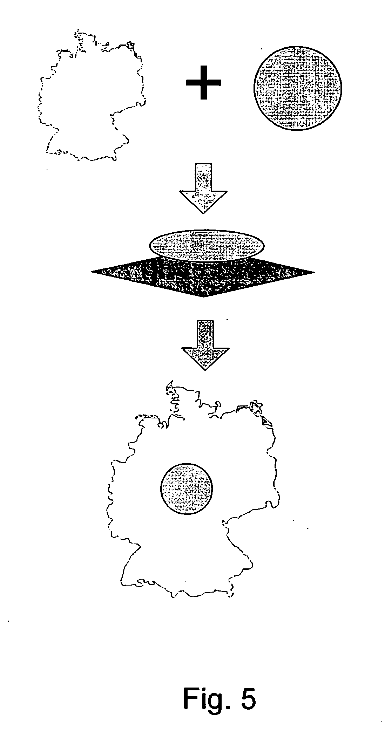

Nach der Zerlegung der Geo-Domäne in Geo-Objekte erfolgt die erfindungsgemäße Selektion von relevanten Geo-Objekten für den jeweiligen Service. Bei einem Multi-Service-System erfolgt die Selektion von relevanten Geo-Objekten jeweils einzeln für einen Service des Multi-Service-Systems separat, da es möglich ist, dass jeder Service eine unterschiedliche Art von Dateneingangsgrößen erfordert. Dieser Sachverhalt wird später noch einmal detaillierter in Zusammenhang mit Figur 5 erläutert.

Nach der Selektion von relevanten Geo-Objekten kann das Back-Office BO eine Liste von Geo-Objekten erstellen, die entweder vollständig oder sequentiell an die On-Board-Unit OBU übertragen werden.

Nach dem die On-Board-Unit OBU die Informationen in Bezug auf die relevanten Geo-Objekte von dem Backoffice BO empfangen hat, wird festgestellt, ob sich die aktuelle Fahrzeugposition innerhalb eines als relevant ausgewählten Geo-Objekts befindet. Nur in diesem Fall wird das Logging von Daten aktiviert. Andernfalls erfolgt kein Logging.

In einer vorteilhaften Ausführungsform der Erfindung ist es vorgesehen, dass der Vergleich zwischen der aktuellen Fahrzeugposition und einem Zugriff übertragene Tabelle von relevanten Geo-Objekten variabel konfiguriert werden kann. So ist es beispielsweise möglich, dass der Vergleich nach einem fest definierten Zeitraster erfolgt (beispielsweise alle 5 Minuten), bei jedem Positionsfix oder von einem zusätzlichen Trigger-Signal ausgelöst wird. Dabei kann das Trigger-Signal von der On-Board-Unit OBU selbst generiert werden oder von sonstigen externen Instanzen ausgelöst werden.

Falls der Vergleich ergibt, dass ein Logging ausgeführt werden soll (nämlich dann, wenn die aktuelle Position innerhalb eines relevanten Geo-Objektes liegt), werden die erfassten Daten an das Back-Office BO übertragen. Dies kann entweder in einem fortlaufenden Prozess erfolgen oder nach einer vorherigen Zwischenspeicherung in der OnBoard-Unit OBU nach vordefinierten Zeitintervallen. Die Art der Übertragung der Daten von der OnBoard-Unit OBU an das Back-Office BO (komprimiert oder nicht, mit oder ohne Kompressionsalgorithmus, mit oder ohne Zwischenspeicherung in der OnBoard-Unit OBU, in welchen Zeitabständen und/oder mit oder ohne vorhergehender Authentisierung und/oder betreffend weitere Parameter) kann vorteilhafterweise dynamisch eingestellt werden.

Die übertragenen Daten werden daraufhin im Back-Office BO empfangen und für den jeweiligen Service zur Weiterverarbeitung aufbearbeitet und an diesen weitergeleitet.

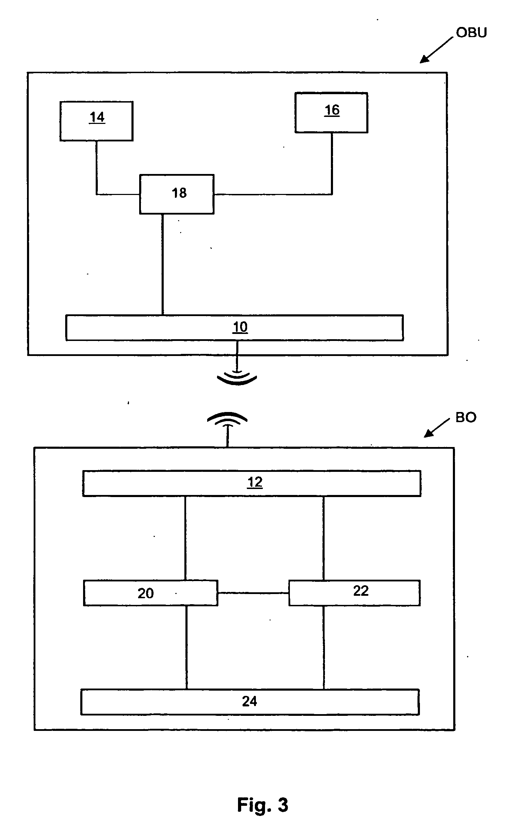

In Figur 3 sind die wesentlichen Bauteile des erfindungsgemäßen OnBoard-Unit OBU gemäß einer bevorzugten Ausführungsform dargestellt.

Soll das erfindungsgemäße System auf ein Multi-Service-System angewendet werden, so ist es grundsätzlich notwendig unterschiedliche Services mit unterschiedlichen Inputgrößen zu versorgen. In der Regel werden für die unterschiedlichen Services auch unterschiedliche relevante Geo-Objekte ausgewählt werden. Dafür ist es notwendig, jeden Service mit einer - im mathematischen Sinne - eineindeutigen Service-Identifikationsnummer zu versehen. Das vorstehend beschriebene Verfahren wird dann für jeden Service einzeln durchgeführt, so dass für einen ersten Service eine erste Liste von relevanten Geo-Objekten, für einen zweiten Service eine zweite Liste von relevanten Geo-Objekten und für einen i-ten Service eine i-te Liste von relevanten Geo-Objekten erstellt wird. Abhängig von den technischen Modulen bzw. Ressourcen der OnBoard-Unit OBU werden entweder alle Service-Listen an die OBU übertragen, oder es wird eine einzige Liste für die OBU erzeugt, die die Schnittmenge der relevanten Geo-Objekte enthält. Im zweiten Fall wird die Auftrennung der einzelnen Services in einem Dispatcher-Modul im Back Office durchgeführt.

Je nachdem mit welchen technischen Modulen bzw. Ressourcen die OnBoard-Unit OBU ausgestattet ist, kann der Wechsel zwischen den einzelnen Services bzw. zwischen den unterschiedlichen Listen der relevanten Geo-Objekte für die einzelnen Services durch einen Dispatcher im Back Office oder bereits in der OBU erfolgen. In der Regel werden bei einem Multi-Service-System unterschiedliche Instanzen einer Geo-Domäne angelegt, so dass beispielsweise eine erste Instanz der Geo-Domäne Deutschland für die Mauterhebung zuständig ist, während beispielsweise eine weitere Instanz der Geo-Domäne Deutschland für das Befahren von gebührenpflichtigen Parkplätzen oder Privatstraßen zugeordnet ist.

In der Regel wird der GPS-Receiver 14 als Bestandteil der OnBoard-Unit OBU ausgebildet sein. In alternativen Ausführungsformen kann es jedoch auch vorgesehen sein, dass der GPS-Receiver 14 als separates und eigenständiges Bauteil im Fahrzeug vorgesehen ist und mit einer entsprechenden Schnittstelle zur OnBoard-Unit OBU ausgestattet ist, dass die von ihm empfangenen positionsbezogenen Daten an die OnBoard-Unit OBU weitergeleitet werden können.

In Figur 5 ist übersichtsartig ein erfindungsgemäßer Aufbau einer solchen Multi-Service-Geo-Domäne dargestellt. Bei der Geo-Domäne Deutschland existiert somit eine Instanz der Geo-Domäne, die gemäß einem ersten Zerlegungsmechanismus (kreisförmige Geo-Objekte) und gemäß einem zweiten Zerlegungsmechanismus (quadratische Geo-Objekte) zerlegt ist.

In der bevorzugten Ausführungsform ist die Berechnungseinheit 18 der OnBoard-Unit OBU lediglich als Vergleichseinheit ausgebildet und dient dazu, einen Vergleich zwischen der aktuellen Position der OnBoard-Unit OBU und den Informationen auszuführen, die von dem Back-Office BO in Bezug auf die relevanten Geo-Objekte übersandt worden sind. Vorzugsweise erfolgt dies mittels eines Zugriffes auf die von dem Back-Office BO übersandten Liste von relevanten Geo-Objekten.

Alternativ ist es zusätzlich möglich, hier weitere Berechnungen und datentechnische Verarbeitungsschritte vorzunehmen. Darüber hinaus ist es möglich, ein Authentisierungsmodul und/oder ein Kompressionsmodul entweder fahrzeugseitig, also in der OnBoard-Unit OBU oder back-office-seitig vorzusehen. Das Authentisierungsmodul dient dazu, die Datenübertragung zwischen den beteiligten Instanzen sicherer zu machen und einen Datenmissbrauch zu vermeiden, indem beispielsweise verhindert wird, dass gefälschte Daten an das Back-Office BO von einer nicht autorisierten On-Board-Unit OBU übertragen werden. Damit muss sich eine OnBoard-Unit OBU erst bei dem Back-Office BO vor der Übertragung der entsprechenden Daten autorisieren. Das Kompressionsmodul dient dazu, die zu übertragenden Daten, insbesondere die Positionsdaten gemäß einem konfigurierbaren Kompressionsalgorithmus zu komprimieren, so dass das zu übertragende Datenvolumen nochmals reduziert werden kann. Alternativ ist es auch möglich, das Authentisierungsmodul und/oder das Kompressionsmodul im Back-Office BO vorzusehen.

In der bevorzugten Ausführungsform sind nur zwei wesentliche Kategorien von Datenobjekten bei der Datenübertragung zwischen der OnBoard-Unit OBU und dem Back-Office BO vorgesehen (in anderen Ausführungen können hier beispielsweise noch Konfigurationsparameter, Schlüsselaustausch etc. vorgesehen sein), nämlich:
1. Informationen über relevante Geo-Objekte, die von dem Back-Office BO an die OnBoard-Unit OBU übertragen werden und
2. Daten, z.B. Positionsdaten, die von der OnBoard-Unit OBU "geloggt" worden sind und an das Back-Office BO gesendet werden.

Es ist in alternativen Ausführungsformen vorgesehen, zu diesen beiden Datenobjekten noch weitere Daten zwischen den beiden Instanzen OBU, BO zu übertragen. So kann beispielsweise noch ein Zeitstempel übertragen werden, der angibt, wie lange die jeweiligen Daten gültig sind und somit einen Gültigkeitszeitraum definiert. Darüber hinaus können alternativ oder kumulativ zu den positionsbezogenen Daten weitere servicebezogene Daten und/oder fahrzeugbezogene Daten übertragen werden. Durch die erfindungsgemäße Architektur liegt ein wesentlicher Vorteil darin, dass das System beliebig erweiterbar ist, indem auf der Seite des Back-Office BO lediglich weitere Module und Sevices angeschlossen werden können (z.B. können hier Services durch andere Services ersetzt bzw. hinzugefügt werden). Damit kann das erfindungsgemäße System auch leicht und schnell auf unterschiedliche Anwendungserfordernisse angepasst werden. Darüber hinaus kann ein und dieselbe OnBoard-Unit OBU für unterschiedliche Länder und/oder für unterschiedliche Services verwendet werden, ohne dass weitere Einstellungen an der OnBoard-Unit OBU ausgeführt werden müssen.

Abschließend sei nochmals darauf hingewiesen, dass mit der erfindungsgemäßen Lösung eine deutliche Performance-Steigerung erzielt werden kann, indem eine Einsparung hinsichtlich Speicherplatz und Rechenzeit bewirkt wird. Dies wird erreicht, indem eine Datenreduktion erfolgt, in Hinblick auf die Daten, die von der OnBoard-Unit OBU übertragen werden. Dabei basiert diese Datenreduktion auf einem Selektionsmechanismus, der es ermöglicht, dass nur für als relevant ausgewählte Geo-Objekte eine Logging von Daten erfolgt, die dann an das Back-Office BO übertragen werden. Zusätzlich kann zu dieser Datenreduktion eine weitere Datenreduktion hinzutreten, indem Kompressionsalgorithmen für die Datenübertragung verwendet werden.

## Patentansprüche

1. Verfahren zum Betreiben eines OnBoard-Unit-Back-Office-Systems für Fahrzeuge innerhalb einer Geo-Domäne, wobei das Fahrzeug mit einer mobilen OnBoard-Unit (OBU) ausgestattet ist und bei dem über ein zentrales Back-Office (BO) zumindest ein Service angeboten wird, wobei in der OnBoard-Unit (OBU) Daten im Hinblick auf das Fahrzeug empfangen werden können, mit folgenden Verfahrensschritte:
• Zerlegen der Geo-Domäne nach einem dynamisch konfigurierbaren Zerlegungsmechanismus in eine Menge von Geo-Objekten,
• Selektion von relevanten Geo-Objekten aus der Menge von Geo-Objekten in Bezug auf zumindest einen Service und
• Aktivieren von Modulen der OnBoard-Unit (OBU), insbesondere Aktivieren eines Loggings von Daten, falls sich die OnBoard-Unit (OBU) in einem als relevant ausgewählten Geo-Objekt befindet.

2. Verfahren nach Anspruch 1, **dadurch gekennzeichnet, dass** der Zerlegungsmechanismus so ausgebildet ist, dass die Geo-Objekte eine vordefinierte geometrische Form aufweisen und insbesondere rechteckig, quadratisch, polygonzug-artig oder kreisförmig ausgebildet sind.

3. Verfahren nach zumindest einem der vorhergehenden Ansprüche, **dadurch gekennzeichnet, dass** der Zerlegungsmechanismus auch für unterschiedliche Instanzen einer Geo-Domäne und/oder für unterschiedliche Geo-Domänen unterschiedlich ausgebildet sein kann, so dass auch ein und dieselbe Geo-Domäne in Geo-Objekte zerlegt werden kann, die unterschiedlich geformt und unterschiedlich groß sein können.

4. Verfahren nach zumindest einem der vorhergehenden Ansprüche, **dadurch gekennzeichnet, dass** eine Vielzahl von unterschiedlichen Services, umfassend abrechnungsbezogene Services, angeboten werden, und, dass für jeden einzelnen Service eine jeweilige Instanz einer Geo-Domäne mit einem ihr zugeordneten Geo-Domänen-Identifikator definiert werden.

5. Verfahren nach zumindest einem der vorhergehenden Ansprüche, **dadurch gekennzeichnet, dass** der Zerlegungsmechanismus für die Geo-Domäne in Abhängigkeit von dem jeweiligen Service konfiguriert wird und/oder, dass die Geo-Domäne bei einem Multi-Service-System auf unterschiedliche Weise und/oder unterschiedlichen Zerlegungs-Mechanismen zerlegt werden kann.

6. Verfahren nach zumindest einem der vorhergehenden Ansprüche, **dadurch gekennzeichnet, dass** die OnBoard-Unit (OBU) als Schnittstelle zur Übertragung von Daten an das Back-Office (BO), insbesondere auch als DSRC-Tag und/oder als Schnittstelle für Geschwindigkeitssignale, Tachosignale, Odometersignale und/oder weitere fahrzeug-bezogene Signale, fungiert, die automatisch aktiviert wird, falls sich die OnBoard-Unit (OBU) in einem als relevant ausgewählten Geo-Objekt, insbesondere in einer DSRC-Domäne, befindet.

7. Verfahren nach zumindest einem der vorhergehenden Ansprüche, **dadurch gekennzeichnet, dass** das Logging von Daten in der OnBoard-Unit (OBU) deaktiviert wird, falls sich das Fahrzeug nicht in einem als relevant ausgewählten Geo-Objekt befindet.

8. Verfahren nach zumindest einem der vorhergehenden Ansprüche, **dadurch gekennzeichnet, dass** keine positionsbezogenen Daten und/oder Fahrzeugdaten, etc. von der OnBoard-Unit (OBU) an das Back-Office (BO) gesendet werden, falls sich die OnBoard-Unit (OBU) nicht in einem relevanten Geo-Objekt befindet.

9. Verfahren nach zumindest einem der vorhergehenden Ansprüche, **dadurch gekennzeichnet, dass** eine Änderung, eine Erweitung und/oder ein Update von Daten, insbesondere von Geo-Objekten und/oder von als relevant ausgewählten Geo-Objekten, auch dann erfolgen kann, wenn sich die OnBoard-Unit (OBU) im Einsatz bzw. im Betrieb befindet.

10. Verfahren nach zumindest einem der vorhergehenden Ansprüche, **dadurch gekennzeichnet, dass** die Aktivierung von Modulen der OnBoard-Unit (OBU) aufgrund von Regeln und/oder Attributen erfolgt, die an den als relevant ausgewählten Geo-Objekten hängen oder eine Referenz zu ihnen aufweisen.

11. OnBoard-Unit-Back-Office-System für Fahrzeuge, die sich innerhalb einer Geo-Domäne bewegen, umfassend:
• zumindest eine mobile OnBoard-Unit (OBU), die zum Logging von Daten bestimmt ist;
• zumindest ein zentrales Back-Office (BO), das zum Empfang und zur Verarbeitung von relevanten Daten bestimmt ist und
• zumindest einen Empfänger (14), der zum Empfang von Daten in Bezug auf das Fahrzeug bestimmt ist,
in dem das Back-Office (BO) ein Zerlegungsmodul (20) und ein Selektionsmodul (22) umfasst, wobei mittels des Zerlegungsmoduls (20) nach einem dynamisch konfigurierbaren Mechanismus die Geo-Domäne in eine Vielzahl von Geo-Objekten zerlegt wird und wobei mittels des Selektionsmoduls (22) aus der Menge der Geo-Objekte die für den jeweiligen Service relevanten Geo-Objekte selektiert werden, dass die OnBoard-Unit (OBU) ein Aktivierungs- und Deaktivierungsmodul (18) umfasst, das ein Logging von Daten nur dann aktiviert, falls festgestellt wird, dass die aktuelle Position des Fahrzeugs, die mittels des Empfängers (14) empfangen worden ist, innerhalb eines als relevant selektierten Geo-Objektes liegt, wobei der Datenaustausch zwischen der OnBoard-Unit (OBU) und dem Back-Office (BO) über entsprechende Kommunikationsmodule (10, 12) erfolgt.

12. OnBoard-Unit-Back-Office-System nach Anspruch 11, **dadurch gekennzeichnet, dass** der Empfänger (14) in der OnBoard-Unit (OBU) oder als separates Modul am Fahrzeug angeordnet ist, das über eine Schnittstelle mit der OnBoard-Unit (OBU) in Datenaustausch steht.

13. OnBoard-Unit (OBU) zum Einsatz in einem OnBoard-Unit-Back-Office-System für Fahrzeuge nach Anspruch 11 oder 12, **dadurch gekennzeichnet, dass** die OnBoard-Unit (OBU) Mittel umfasst, um die Schritte eines Verfahrens gemäß den vorstehenden Verfahrensansprüchen auszuführen.

## Claims

1. Method for operating an on-board unit back-office system for vehicles within a geodomain, wherein the vehicle is equipped with a mobile on-board unit (OBU) and in which at least one service is offered via a central back-office (BO), wherein vehicle-related data can be received in the on-board unit (OBU), with the following method steps:
• Separation of the geodomain into a quantity of geoobjects according to a dynamically configurable separation mechanism,
• Selection of relevant geoobjects from the quantity of geoobjects with regard to at least one service and
• Activation of modules of the on-board unit (OBU), in particular activation of data logging, if the on-board unit (OBU) is situated in a geoobject selected as relevant.

2. Method according to claim 1, **characterized in that** the separation mechanism is formed such that the geoobjects have a pre-defined geometric shape and are in particular formed rectangular, square, in the style of a frequency polygon or circular.

3. Method according to at least one of the preceding claims, **characterized in that** the separation mechanism can also be formed differently for different instances of a geodomain and/or for different geodomains, with the result that one and the same geodomain can also be separated into geoobjects which can be shaped differently and be of different sizes.

4. Method according to at least one of the preceding claims, **characterized in that** a plurality of different services, comprising accountancy-related services, are offered and that for each individual service a respective instance of a geodomain is defined with a geodomain identifier assigned to it.

5. Method according to at least one of the preceding claims, **characterized in that** the separation mechanism for the geodomain is configured depending on the service in question and/or that in the case of a multiservice system the geodomain can be separated in different ways and/or using different separation mechanisms.

6. Method according to at least one of the preceding claims, **characterized in that** the on-board unit (OBU) acts as an interface for the transmission of data to the back-office (BO), in particular also as DSRC tag and/or as interface for speed signals, tacho signals, odometer signals and/or further vehicle-related signals, which is automatically activated if the on-board unit (OBU) is situated in a geoobject selected as relevant, in particular in a DSRC domain.

7. Method according to at least one of the preceding claims, **characterized in that** data logging is deactivated in the on-board unit (OBU) if the vehicle is not situated in a geoobject selected as relevant.

8. Method according to at least one of the preceding claims, **characterized in that** no position-related data and/or vehicle data, etc., are sent from the on-board unit (OBU) to the back-office (BO) if the on-board unit (OBU) is not situated in a relevant geoobject.

9. Method according to at least one of the preceding claims, **characterized in that** a modification, an expansion and/or an update of data, in particular of geoobjects and/or geoobjects selected as relevant, can take place even if the on-board unit (OBU) is in use or in operation.

10. Method according to at least one of the preceding claims, **characterized in that** the activation of modules of the on-board unit (OBU) take place on the basis of rules and/or attributes which depend on the geoobjects selected as relevant or make reference to them.

11. On-board unit back-office system for vehicles which move within a geodomain, comprising:
• at least one mobile on-board unit (OBU) which is intended for data logging;
• at least one central back-office (BO) which is intended for the reception and processing of relevant data and
• at least one receiver (14) which is intended for the reception of vehicle-related data,
in which the back-office (BO) comprises a separation module (20) and a selection module (22), wherein the geodomain is separated by means of the separation module (20) according to a dynamically configurable mechanism into a plurality of geoobjects and wherein the geoobjects relevant for the service in question are selected by means of the selection module (22) from the quantity of geoobjects, the on-board unit (OBU) comprises an activation and deactivation module (18), which activates data logging only if it is established that the current position of the vehicle which has been received by means of the receiver (14) lies within a geoobject selected as relevant, wherein the data exchange between the on-board unit (OBU) and the back-office (BO) takes place over corresponding communication modules (10, 12).

12. On-board unit back-office system according to claim 11, **characterized in that** the receiver (14) is installed in the vehicle in the on-board unit (OBU) or as a separate module which exchanges data with the on-board unit (OBU) via an interface.

13. On-board unit (OBU) for use in an on-board unit back-office system for vehicles according to claim 11 or 12, **characterized in that** the on-board unit (OBU) comprises means to carry out the steps of a method according to the above method claims.

## Revendications

1. Procédé pour exploitation d'un «Onboard-Unit-Back-Office-System»pour des véhicules dans un domaine géo, le véhicule étant équipé avec un «Onboard-Unit» mobile (OBU) et au moins un service étant offert à travers un «Back-Office» central (BO), des données pouvant être reçues dans la «Onboard-Unit» (OBU) en vue du véhicule comprenant les étapes de procédé suivantes :
• décomposition du domaine géo selon un mécanisme de décomposition configurable dynamiquement dans une quantité des objets géo
• sélection des objets géo importants relatif à au moins un service et
• activation des modules du «Onboard-Unit» (OBU), notamment l'activation d'un «logging» des données si le «Onboard-Unit» (OBU) se trouve dans un objet géo sélectionné comme important.

2. Procédé selon la revendication 1, **caractérisé en ce que** le mécanisme de décomposition est conformé de sorte que les objets géo présentent une forme géométrique prédéfinie et sont notamment conformés d'une manière rectangulaire, carrée, polygonale ou circulaire.

3. Procédé selon au moins l'une quelconque des revendications précédentes, **caractérisé en ce que** le mécanisme de décomposition peut être conformé différemment aussi pour des instances différentes d'un domaine géo et / ou pour des domaines géo différents de sorte qu'aussi le même domaine géo peut être décomposé dans des objets géo qui sont formés différemment et peuvent avoir une taille différente.

4. Procédé selon au moins l'une quelconque des revendications précédentes, **caractérisé en ce qu'**une pluralité des services différents comprenant des services concernant le décompte est offert et que pour chaque service individuel une instance correspondante d'un domaine géo est définie avec un identificateur de domaine géo attribué.

5. Procédé selon au moins l'une quelconque des revendications précédentes, **caractérisé en ce que** le mécanisme de décomposition pour le domaine géo est configuré en fonction du service correspondant et / ou que le domaine géo peut être décomposé dans le cas d'un système multi-services différemment et/ou par des mécanismes de décomposition différents.

6. Procédé selon au moins l'une quelconque des revendications précédentes, **caractérisé en ce que** le «Onboard-Unit» (OB) fait office d'interface pour la transmission des données au «Back-Office» (BO), notamment aussi comme «tag DSRC» et/ou comme interface pour des signaux de vitesse, des signaux de tachymètre, des signaux d'odomètre et/ou d'autres signaux concernant les véhicules qui est activé automatiquement si le «Onboard-Unit» (OBU) se trouve dans un objet géo sélectionné comme important, notamment dans un domaine DSRC.

7. Procédé selon au moins l'une quelconque des revendications précédentes, **caractérisé en ce que** le «logging» des données dans le «Onboard-Unit» (OBU) est déactivé, si le véhicule ne se trouve pas dans un objet géo sélectionné comme étant important.

8. Procédé selon au moins l'une quelconque des revendications précédentes, **caractérisé en ce qu'**aucunes données relatif à la position et / ou aucunes données de véhicule etc. sont transmises du «Onboard-Unit» (OBU) au «Back-Office» (BO), si le «Onboard-Unit» (OBU) ne se trouve pas dans un objet géo important.

9. Procédé selon au moins l'une quelconque des revendications précédentes, **caractérisé en ce qu'**une modification, une extension et / ou une mise à jour des données, notamment des objets géo et / ou des objets géo sélectionnés comme étant importants, peut être effectuée, même si le «Onboard-Unit» (OBU) est en cours d'exploitation et / ou en opération.

10. Procédé selon au moins l'une quelconque des revendications précédentes, **caractérisé en ce que** l'activation des modules du «Onboard-Unit» (OBU) a lieu en vertu des règles et / ou des attributs attachés aux objets géo sélectionnés comme importants ou se rapportent à eux.

11. «Onboard-Unit-Back-Office-System» pour des véhicules circulants dans un domaine géo comprenant :
• au moins un «Onboard-Unit» (OBU) mobile destiné au «logging» des données ;
• au moins un «Back-Office» (BO) central destiné à la réception et le traitement des données importantes et
• au moins un récepteur (14) destiné à la réception des données relatif au véhicule,
le «Back-Office» (BO) comprenant un module de décomposition (20) et un module de sélection (22), le domaine géo étant décomposé dans une pluralité des objets géo au moyen du module de décomposition (20) selon un mécanisme configurable dynamiquement, et les objets géo importants pour le service correspondant étant sélectionnés de la quantité des objets géo au moyen du module de sélection (22), le «Onboard-Unit» (OBU) comprenant un module d'activation et de déactivation (18) qui n'active un «logging» des données que s'il est constaté que la position actuelle du véhicule qui a été reçu par le récepteur (14), se trouve endéans un objet géo sélectionné comme important, l'échange des données entre le «Onboard-Unit» (OBU) et le «Back-Office» (BO) s'effectuant à travers des modules de communications correspondants (10,12).

12. «Onboard-Unit-Back-Office-System» selon la revendication 11, **caractérisé en ce que** le récepteur (14) est disposé dans le «Onboard-Unit» (OBU) ou comme module séparé au véhicule qui est en échange des données avec le «Onboard-Unit» (OBU) à travers une interface.

13. «Onboard-Unit» (OBU) pour l'usage dans un «Onboard-Unit-Back-Office-System» pour des véhicules selon la revendication 11 ou 12, **caractérisé en ce que** le «Onboard-Unit» (OBU) comporte des moyens pour réaliser des étapes d'une procédé selon les revendications de procédé ci-dessus.
